(19) **Europäisches Patentamt**

**European Patent Office**

**Office européen des brevets**

(11) **EP 1 424 591 A1**

(12) ## EUROPEAN PATENT APPLICATION

(43) Date of publication:
**02.06.2004 Bulletin 2004/23**

(51) Int Cl.⁷: **G02F 1/225**

(21) Application number: **02079871.6**

(22) Date of filing: **22.11.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **Corning O.T.I. SRL**
**20126 Milano (IT)**

(72) Inventors:
• **Balsamo, Stefano**
**17014 Cairo Montenotte (SV) (IT)**

• **Bravetti, Paolo**
**20052 Monza (MI) (IT)**
• **Ghislotti, Giorgio**
**22050 Monteveccia (LC) (IT)**

(74) Representative: **Poole, Michael John et al**
**Corning Limited**
**Patents & Licensing Department**
**Quantum House,**
**Maylands Avenue**
**Hemel Hempstead, Herts. HP2 7DE (GB)**

(54) **Electro-optical modulator and method of modulating optical signals**

(57) A single-drive electro-optic Mach Zehnder modulator comprises a body of an electro-optically active material; optical waveguides are formed at least partly in that material and constitute a Mach Zehnder interferometer having two limbs providing alternative light paths between an input and an output so that interference may occur between light taking the alternative paths on recombination at the exit. At least two sets of electrodes are provided, for subjecting longitudinally spaced sections of at least one of the limbs to an electric field, and in at least one of the sections the waveguides of the two limbs are coupled.

Figure 1

EP 1 424 591 A1

**Description**

This invention relates to electro-optic modulators for use in transmitting or regenerating optical digital signals, and to methods of modulating optical signals in which the modulators of the invention are used.

Since the refractive index (and in a waveguide structure the effective refractive index) in an electro-optic material can be changed by the application of an electric field (for example by the Pockels effect) or by the absorption of light, it will vary with time according to the modulation wave-form, and this produces changes which can be interpreted as phase modulation or as a change in frequency spectrum, and which are generally referred to as "chirp". In properly designed devices, chirp can be controlled and made use of.

For example, since the light in optical digital signals cannot be perfectly monochromatic, its transit time through an optical fibre or other transmission path varies sufficiently to produce significant broadening of the digital pulses ("chromatic dispersion") and increases in their rise and/or fall times, ultimately risking that they become indistinguishable and an unacceptable bit-error rate results. If, however, the pulses as originally launched from the transmitter are chirped in a direction opposed to the chromatic dispersion that will arise in the transmission path, the chirping has to be cancelled before pulse broadening will become significant, allowing an increase in the length of transmission path before a regenerator or a repeater must be used.

In dual-drive modulators, control of chirp is relatively easy to achieve, but in single-drive electro-optical modulators at present known (for example Cartledge, IEEE Photonics Technology Letters, vol 7 no.9, September 1995; and Jiang et al, IEEE Photonics Technology Letters, vol 8 no.10, October 1996, "LiNbO$_3$ Mach-Zehnder Modulators with Fixed Negative Chirp") adjustment has been limited at most to fine-tuning around a pre-selected chirp level.

The present invention provides single-drive electro-optic Mach Zehnder modulators in which chirp can be adjusted over a substantially wider range, so that chirp values can be changed to accommodate planned or unexpected changes in the operating conditions of the optical transmission installation in which the modulators are used, and the need to manufacture and stock multiple types of modulator differing in chirp value is substantially reduced, if not completely eliminated.

The single-drive electro-optic Mach Zehnder modulator of the invention comprises a body of an electro-optically active material; optical waveguides formed at least partly in that material and constituting a Mach Zehnder interferometer having two limbs constituting alternative light paths between an input and an output so that interference may occur between light taking the alternative paths on recombination at the exit and electrodes for subjecting at least part of at least one of the limbs to an electric field, and is *characterised in that* the interferometer is divided into at least two longitudinally spaced sections with separate sets of electrodes and that in at least one of those sections the waveguides of the two limbs are coupled.

A "set" of electrodes may be a pair of electrodes for applying an electric field to part of one limb of the interferometer, but it will more usually be three (or perhaps four) electrodes for applying corresponding electric fields in a "push-pull" relationship to the corresponding parts of both limbs. In some cases, an electrode (but not all of them) may be shared between two (or where applicable more than two) sets; normally this would be used as a ground (earth) electrode.

In use, a first D C electrical bias will be applied to the set of electrodes in the section where the waveguides are coupled (or one of those sections), and an electrical radio-frequency signal conveying the data to be modulated onto an input continuous-wave light beam will be applied to the electrodes of another section in the usual way, and the invention includes methods of modulating a light signal in which the modulator of the invention is used in this way. If there are only two sections, it will normally be necessary to apply a second D C bias, independent of the first D C bias, to the same electrodes as the radio-frequency signal; if there are three (or more) sections, a D C bias is preferably applied instead to the electrodes of a third section.

Depending on the chirp effect desired, the said section where the waveguides are coupled, and so the electrodes to which the first D C bias is to be applied may be positioned where such bias will simply serve to adjust the operating point of the modulator (allowing the bias, if any, applied with the data signal to be adjusted to obtain the desired chirp level), in which case the waveguides are preferably coupled throughout their length; or they may be positioned where they will affect the partition of the light between the two limbs (as in a Y-branch variable attenuator) in relative amplitude and relative phase, in which case the associated parts of the waveguides need to be coupled, but other parts are preferably uncoupled. Coupling can be achieved, as is known, by having the waveguides sufficiently close together in relation to their materials and dimensions; for typical waveguides based on lithium niobate diffused with titanium, a spacing (centre to centre) of less than about 28 μm will usually result in a substantial degree of coupling.

The lengths of the electrodes sets may be chosen, independently of each other, to optimise their particular effects (for example in trading off length and operating voltage).

The invention can be used with any electro-optic material which can support light guiding: for example, with lithium niobate (z- or x- cut), gallium arsenide and other suitable compound semiconductors, and electro-optic (poled) polymers.

The invention will be further described, by way of example, with reference to the accompanying drawings in which:

Figure 1 is a diagrammatic representation of a first electro-optic Mach Zehnder modulator in accordance with the invention;
Figures 2-4 are graphs to assist understanding of this first modulator;
Figure 5 is a set of simulated eye diagrams for this first modulator;
Figure 6 is a diagrammatic representation of a second electro-optic Mach Zehnder modulator in accordance with the invention;
Figures 7-9 are graphs to assist understanding of modulators of this second type;
Figure 10 is a set of eye diagrams for this second modulator;
Figure 11 is a diagrammatic representation of a third electro-optic Mach Zehnder modulator in accordance with the invention; and
Figure 12-13 are measured graphs to assist understanding of this third modulator.

Throughout the following examples, numerical values relate to modulators for use in the 1520-1620 nm waveband; the invention is applicable to other wavebands (in particular the bands around 850 and 1300 nm) but the dimensions will need to be appropriately adjusted.

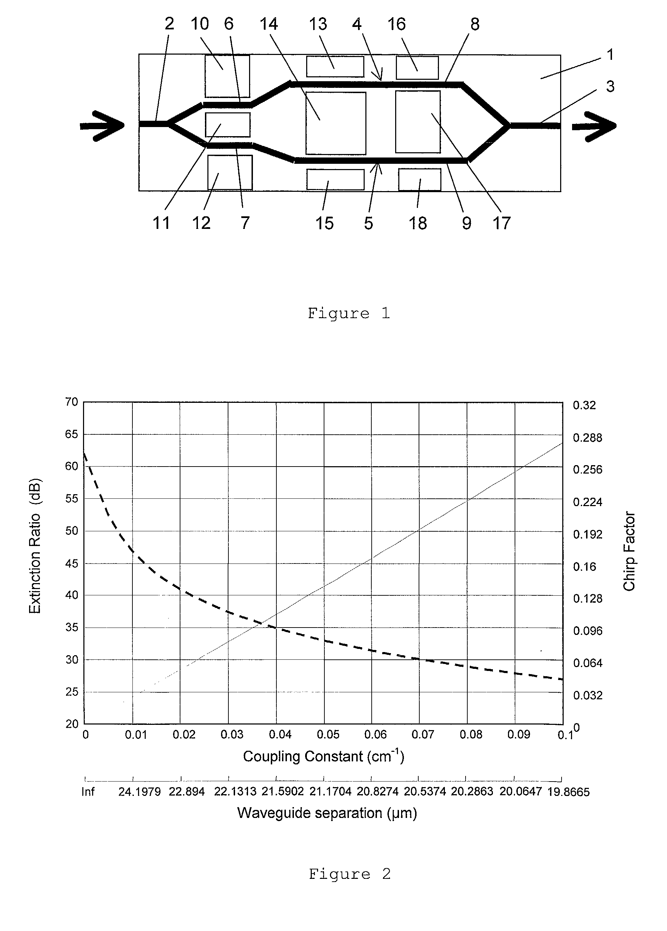

The modulator of Figure 1 comprises an x-cut lithium niobate chip 1 in which are formed optical waveguides forming a Mach Zehnder interferometer having an input waveguide 2, parallel limbs 3 and 4 and an output waveguide 3 connected by Y-junctions in the usual way. Each of the limbs 4 and 5 includes an upstream part 6, 7 defining a first section of the modulator, which parts are close enough to each other for a substantial degree of optical coupling to occur between them, and a downstream part 8, 9 defining a second section where the spacing is increased (or alternatively the design of the waveguide could be changed) so that optical coupling between them is negligible.

In accordance with the invention, a first set of electrodes 10, 11, 12 is formed on the chip in the first section and (since the waveguides are coupled) the voltage or voltages applied to these electrodes influences the relative intensity of light in the two branches and its phase relationship.

A second set of electrodes 13, 14, 15 defining a second section and optionally a third set of electrodes 16, 17, 18 defining a third section are formed on the chip in a position or positions to apply electric fields to the downstream parts of the waveguides where there is no substantial coupling between the waveguides of the two limbs. A radio-frequency optical signal conveying the data to be modulated onto light passing through the modulator is applied to the electrodes of the second set in the usual way, and a D C bias voltage is applied to the electrodes of the third set, if present, or otherwise also to the electrodes of the second set; the bias voltage is adjusted in the known manner to control the operating point of the interferometer, usually set at the "half-power" point where the response is both steepest and most nearly linear.

The electrodes 16, 17, 18 of the optional third set (bias electrodes) are shown, by way of example, downstream of the electrodes to which the radio-frequency data signal is applied, but they could alternatively be upstream, or there could be sets of bias electrodes in both these positions, with the same or different bias voltages applied to them. It is also noted that the modulator shown in Figure 1 can be operated with the direction of the light reversed.

Meantime, adjustment of the voltage (or voltages) applied to the electrodes of the first section allows adjustment of the chirp factor of the modulator, as further discussed below. A useful general discussion of chirp factor can be found in the paper by Koyama et al in *Journal of Lightwave Technology* vol 6 no. 1, January 1988, pages 87-93; note that when used in a quantitative sense, "chirp" is defined by the formula

$$\Delta f = \frac{1}{2\pi} \frac{d\phi}{dt}$$

and "chirp factor" by the formula

$$\alpha = 2P \frac{\dfrac{d\phi}{dt}}{\dfrac{dP}{dt}}$$

in which $\phi$ is the phase of the output light, $P$ is its instantaneous intensity, and $t$ is time.

The first section of the modulator may be symmetrical between the two waveguides, as shown, in which case a range of positive and negative chirp values is achievable; or it may be made unsymmetrical by adopting different dimensions and/or compositions for the two waveguides, or unsymmetrical locations for the relevant edges of the electrodes, or by applying different voltages to the outer electrodes (10 and 12), or more than one of these, in order to adjust the range of chirp levels achievable. When operating in the 1520-1620 waveband, where standard single-mode fibre has a positive dispersion, it will usually be preferred to use such asymmetry to obtain a range of negative chirp factors.

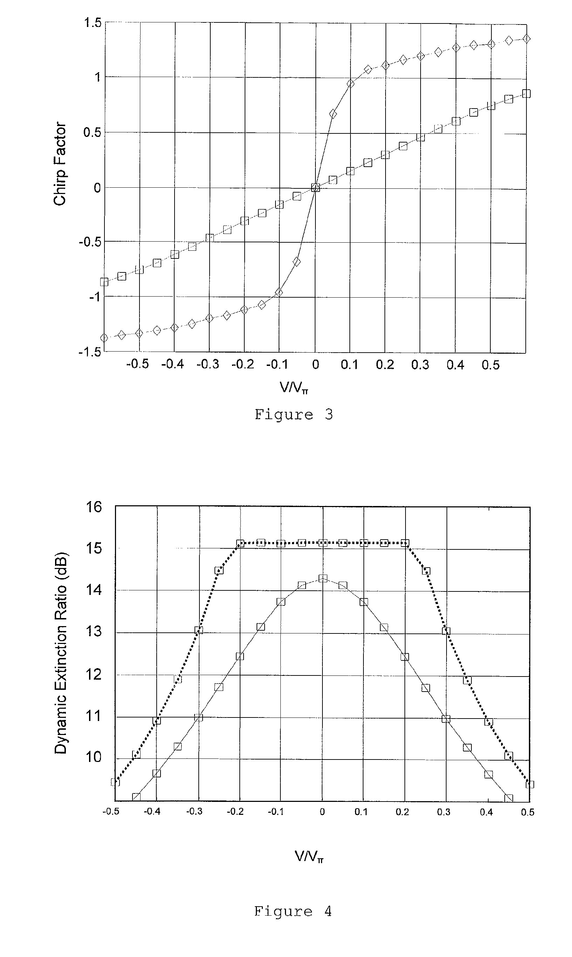

Figure 2 shows static extinction ratio (dashed curve) and chirp factor (continuous line) as a function of the coupling constant, and this is also interpreted as the separation between the waveguides for a typical lithium niobate Mach Zehnder modulator with waveguides uniformly 6 μm wide. The relationship between waveguide spacing and coupling coefficient will of course vary depending on the material and other characteristics.

Figure 3 relates to an interferometer of the type shown in Figure 1 made with x-cut lithium niobate and with waveguides 6.5 μm wide and 3.5 μm deep formed by titanium diffusion, with their axes spaced by 19 μm in the first section and 28 μm in the second section. The electrodes 10, 11, 12 of the first (D C bias) set are 6 mm long and electrodes 13, 14, 15) of the second (R F signal) set 6 mm long, in each case spaced 10 μm apart and symmetrically spaced about the relevant waveguide; optional electrodes 16, 17, 18 are not used. The figure shows the chirp factor obtained with varying voltages applied to the electrode 11 (electrodes 10 and 12 both being earthed (grounded)). This voltage (V) is expressed as its ratio to the voltage ($V_\Pi$) required on these electrodes to produce a phase change of n, and the chirp ratio is calculated both for small signals (squares, □) and large signals (diamonds, ◊).

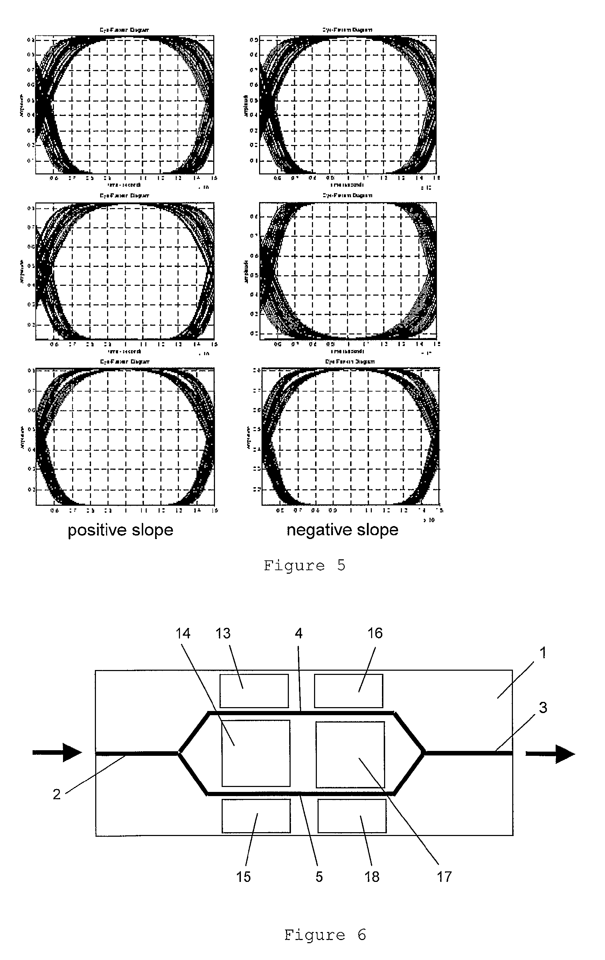

Figure 4 shows the dynamic extinction ratio computed for this modulator when the bias applied to electrodes 16-18 is adjusted to operate at the half-power point (continuous curve) or to maximise the extinction ratio (dotted curve). In either case, a dynamic extinction ratio better than 11dB is achievable over a ±0.5 range of chirp factor. Figure 5 further illustrates the characteristics of this modulator by presenting eye diagrams (for positive and negative slope) of the modulator transfer characteristic in order from the top down with applied voltages V of zero (chirp factor also zero), +0.6$V_\Pi$ (chirp factor +0.85) and -0.6$V_\Pi$ (chirp factor -0.85).

Figure 6 shows another form of the invention, which is conventional except that the waveguides of the two limbs are close enough to be coupled throughout their lengths. In this type of modulator, the radio-frequency electrical data-input signal and a first D C bias voltage will both be applied to the first set of electrodes 13-15, and a second bias voltage to the second set of electrodes 16-18; the first bias voltage, to a sufficient approximation, sets the chirp factor and the second can be adjusted to obtain the desired operating point condition.

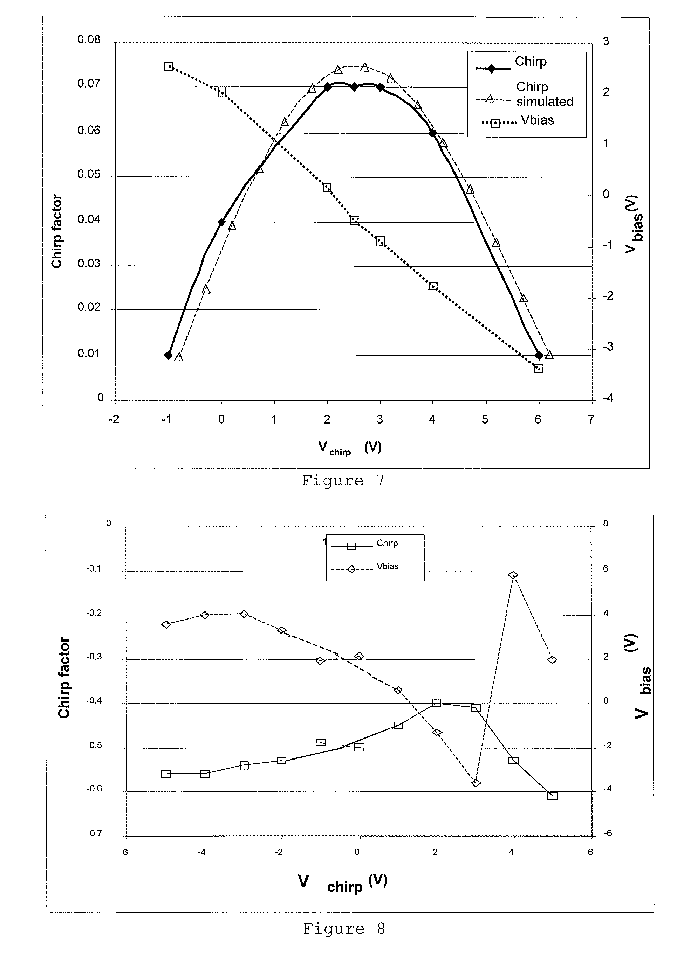

Figure 7 relates to a symmetrical modulator of this kind in which the spacing of the limbs is uniformly 24 μm, the electrodes 16, 17, 18 6 mm long, and the material and other dimensions as in the previous example. It shows the calculated and observed chirp factor values (dashed and continuous curves respectively) for as a function of the D C bias voltage applied to the first set of electrodes, and also shows (dotted curve) the voltage that needs to be applied to the second set of electrodes to maintain operation at the half-power point (close to a displaced inverse relationship).

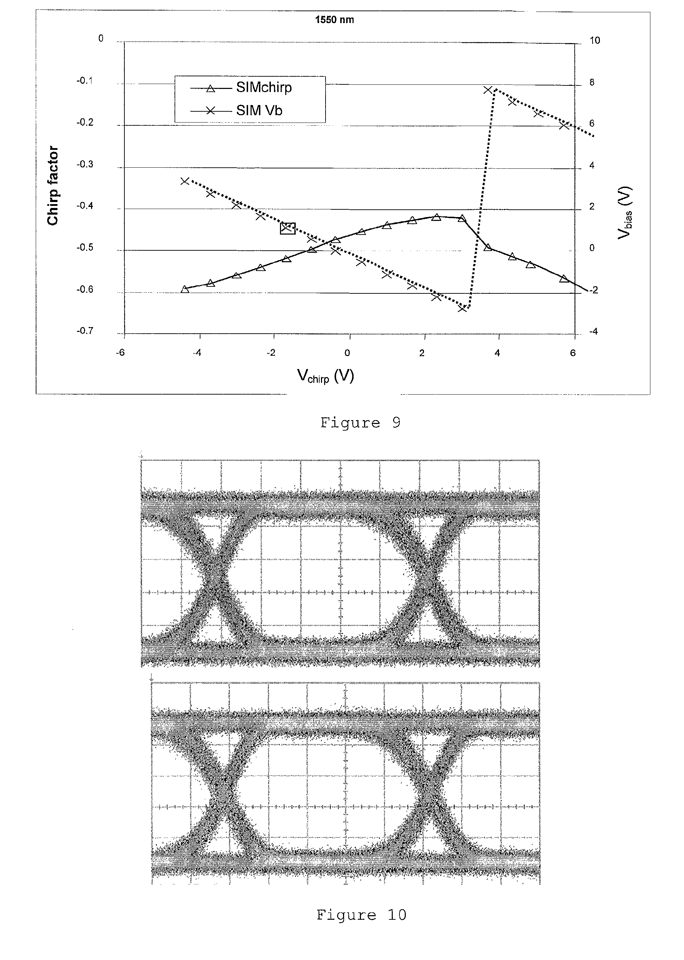

Figure 8 is a corresponding graph for a modified modulator which is made unsymmetric by doubling the width of the gap between electrodes 16 and 17 so that its chirp factor will always be negative; a range of chirp from about -0.4 to -0.6 is obtainable. Figure 9 shows the corresponding simulation results.

Figure 10 shows eye diagrams for this modulator, the upper one with $V_{chirp}$ set at +2 V and $V_{bias}$ at -0.1V, demonstrating a crossing of 51.2% and an extinction ratio of 14 dB, and the lower one with $V_{chirp}$ set at -4 V and $V_{bias}$ at -3V, demonstrating a crossing of 49.6% and an extinction ratio again of 14 dB.

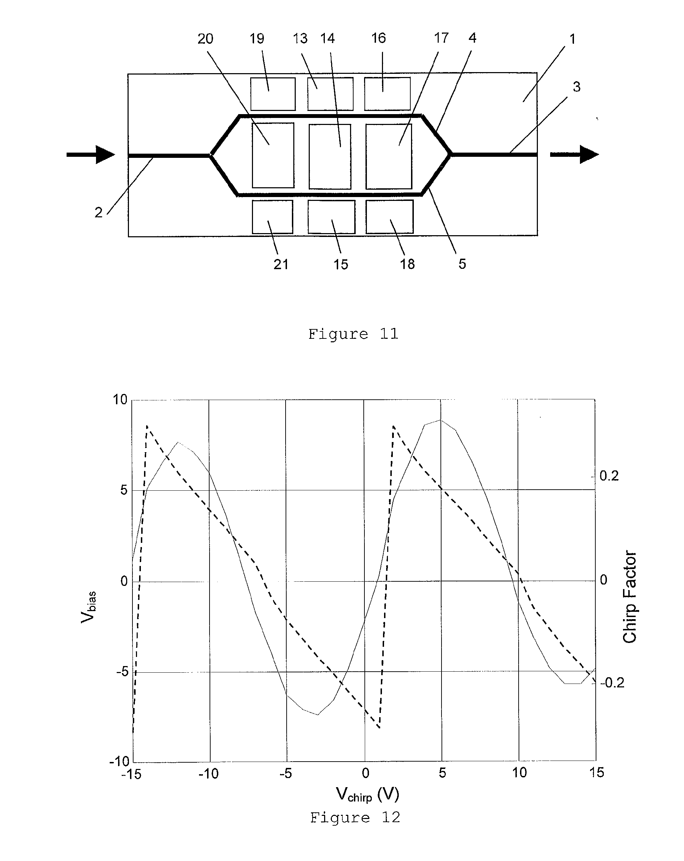

Figure 11 shows another design of modulator in accordance with the invention which is similar to the one shown in Figure 6 but with the addition of a further set of electrodes 19-21 defining a third section upstream of electrodes 13-15; by applying a further D C bias to these, while the R F data signal is applied to electrodes 13-15 and another D C bias to electrodes 16-18, it becomes easier to achieve a desired chirp value and at the same time maintain the desired operating conditions.

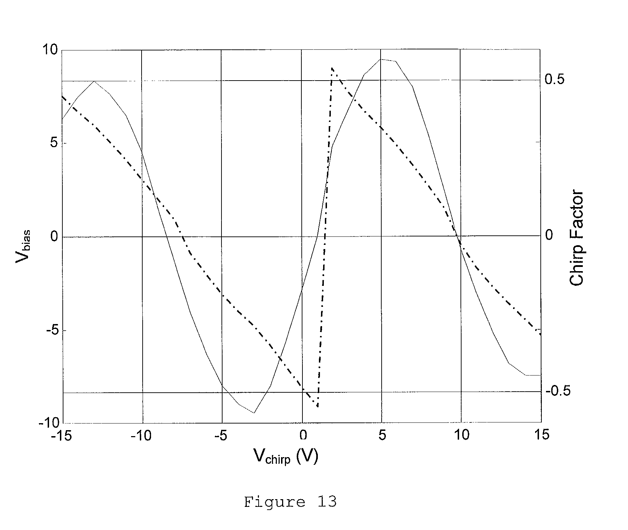

Figures 12 and 13 are graphs computed for a modulator in accordance with Figure 11 which is identical to the one to which figures 6-10 relate apart from the addition of the set of electrodes 19, 20, 21, which are 6 mm long. They show as a continuous curve the chirp factor as a function of the voltage applied to these upstream electrodes 19-21 and as a dashed curve the voltage that needs to be applied to the second set of electrodes 16, 17, 18 to maintain operation at the half-power point. Figures 12 and 13 are measured for operating wavelengths of 1550 nm and 1610 nm respectively.

It should be noted that the invention is applicable in communication systems using either RZ or NRZ formats, and that it requires no additional radio-frequency electronics.

Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.

**Claims**

1. A single-drive electro-optic Mach Zehnder modulator comprising a body of an electro-optically active material; optical waveguides formed at least partly in that material and constituting a Mach Zehnder interferometer having two limbs constituting alternative light paths between an input and an output so that interference may occur between light taking the alternative paths on recombination at the exit and electrodes for subjecting at least part of at least one of the limbs to an electric field, *characterised*

*in that* the interferometer is divided into at least two longitudinally spaced sections with separate sets of electrodes and that in at least one of those sections the waveguides of the two limbs are coupled.

2.  A modulator in accordance with claim 1 in which each set of electrodes is a pair of electrodes for applying an electric field to part of one limb of the interferometer.

3.  A modulator in accordance with claim 1 in which each set of electrodes consists of three or four electrodes for applying corresponding electric fields in a "push-pull" relationship to corresponding parts of both limbs of the interferometer.

4.  A modulator in accordance with any one of claims 1-3 in which the said section where the waveguides are coupled is positioned where a bias applied to its electrodes will simply serve to adjust the operating point of the modulator and the waveguides of the two limbs are coupled throughout their length.

5.  A modulator in accordance with any one of claims 1-3 in which the said section where the waveguides are coupled is positioned where a bias applied to its electrodes will affect the partition of the light between the two limbs in relative amplitude and relative phase.

6.  A modulator as claimed in claim 5 in which other parts of the waveguides are uncoupled.

7.  A modulator as claimed in any one of claims 1-6 in combination with a source of a first D C Bias connected to electrodes in a section where the waveguides are coupled, a source of a radio-frequency data signal and a second, independent, source of D C bias, each connected to electrodes in another section or sections of the modulator.

8.  A method of modulating a light signal using a single-drive electro-optic Mach Zehnder modulator comprising a body of an electro-optically active material; optical waveguides formed at least partly in that material and constituting a Mach Zehnder interferometer having two limbs constituting alternative light paths between an input and an output so that interference may occur between light taking the alternative paths on recombination at the exit and electrodes for subjecting at least part of at least one of the limbs to an electric field, *characterised by* dividing the modulator into at least two longitudinally spaced sections with separate sets of electrodes and making the waveguides of the two limbs coupled in at least one of those sections, connecting a first D C bias to the electrodes of that section, connecting an electrical radio-frequency signal conveying the data to be modulated onto an input continuous-wave light beam to electrodes of another section, and connecting a second, independent, D C electrical bias to electrodes of the other section or those of a third section.

9.  A method in accordance with claim 8 comprising using a modulator in which the waveguides of the two limbs are coupled throughout their lengths and placing the electrodes to which the first D C bias is applied where such bias will simply serve to adjust the operating point of the modulator.

10. A method in accordance with claim 8 comprising placing the electrodes to which the first D C bias is applied where such bias will affect the partition of the light between the two limbs in relative amplitude and relative phase.

11. A method as claimed in claim 10 comprising using a modulator in which the associated parts of the waveguides are coupled, but other parts are uncoupled.

Figure 1

Figure 2

Figure 3

Figure 4

positive slope          negative slope

Figure 5

Figure 6

Figure 7

Figure 8

Figure 9

Figure 10

Figure 11

Figure 12

Figure 13

EP 1 424 591 A1

**European Patent Office**

**EUROPEAN SEARCH REPORT**

Application Number

EP 02 07 9871

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 763 974 A (THANIYAVARN SUWAT) 16 August 1988 (1988-08-16) * column 2, line 5 - line 36; figure 3A * --- | 1,2,8 | G02F1/225 |
| A | US 5 917 642 A (JIANG PISU ET AL) 29 June 1999 (1999-06-29) * figures 1,2 * --- | 1,8 | |
| A | CARTLEDGE J C: "PERFORMANCE OF 10 GB/S LIGHTWAVE SYSTEMS BASED ON LITHIUM NIOBATE MACH-ZEHNDER MODULATORS WITH ASYMMETRIC Y-BRANCH WAVEGUIDES" , IEEE PHOTONICS TECHNOLOGY LETTERS, IEEE INC. NEW YORK, US, VOL. 7, NR. 9, PAGE(S) 1090-1092 XP000527528 ISSN: 1041-1135 * the whole document * --- | 1,8 | |
| A | PISU JIANG ET AL: "LINBO3 MACH-ZEHNDER MODULATORS WITH FIXED NEGATIVE CHIRP" , IEEE PHOTONICS TECHNOLOGY LETTERS, IEEE INC. NEW YORK, US, VOL. 8, NR. 10, PAGE(S) 1319-1321 XP000628946 ISSN: 1041-1135 * the whole document * ----- | 1,8 | **TECHNICAL FIELDS SEARCHED (Int.Cl.7)** G02F |

The present search report has been drawn up for all claims

| Place of search | Date of completion of the search | Examiner |
|---|---|---|
| THE HAGUE | 1 April 2003 | Gill, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

EP 1 424 591 A1

## ANNEX TO THE EUROPEAN SEARCH REPORT
## ON EUROPEAN PATENT APPLICATION NO.

EP 02 07 9871

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2003

| Patent document cited in search report | | Publication date | Patent family member(s) | Publication date |
|---|---|---|---|---|
| US 4763974 | A | 16-08-1988 | NONE | |
| US 5917642 | A | 29-06-1999 | NONE | |

EPO FORM P0459

For more details about this annex : see Official Journal of the European Patent Office, No. 12/82

14